# EUROPEAN PATENT APPLICATION

(11) **EP 4 574 553 A1**
(43) Date of publication of application: **25.06.2025**
(21) Application number: 24219296.1
(22) Date of filing: 12.12.2024
(51) Int. Cl.: B60L 53/80, B60K 1/04, B60K 1/00

(54) **VEHICLE AND METHOD FOR REPLACING POWER STORAGE DEVICES INSTALLED IN SUCH VEHICLE**

(30) Priority: 19.12.2023 JP 2023213805
(71) Applicant: TOYOTA JIDOSHA KABUSHIKI KAISHA, Aichi-ken, 471-8571 (JP)
(72) Inventor: ICHIKAWA, Shinji, TOYOTA-SHI, AICHI-KEN, 471-8571 (JP)
(74) Representative: Cabinet Beau de Loménie

(57) **Abstract**

A vehicle (100) includes a vehicle body (10) configured such that a plurality of power storage devices is detachably attachable, and a control device (18a) configured to decide installation positions of the power storage devices. The control device (18a) is configured to, when installing the power storage devices of a fewer count than an upper limit count of the installation positions, decide a position that satisfies a positional relation at which a center position of the vehicle (100) is interposed between a position of a drive source of the vehicle (100) and this position, as an installation position of the power storage devices of a fewer count than the upper limit count.

## Description

### BACKGROUND OF THE INVENTION

### 1. Field of the Invention

The present disclosure relates to a vehicle equipped with a plurality of power storage devices.

### 2. Description of Related Art

US 2023/0234540 A discloses a vehicle equipped with a battery replacement mechanism for replacing positions of a plurality of replaceable batteries.

### SUMMARY OF THE INVENTION

In a vehicle equipped with a plurality of replaceable batteries as described above, when fewer batteries than an upper limit count for installation are installed, suitable vehicle weight balance of the vehicle may become unattainable, depending on the positions at which the batteries are installed.

The present disclosure has been made to solve the above-mentioned problems, and an object thereof is to provide a vehicle in which a suitable vehicle weight balance is obtained when batteries of a fewer count than the upper limit count are installed.

A first aspect of the present disclosure is a vehicle. The vehicle includes a vehicle body configured such that a plurality of power storage devices is detachably attachable and a control device configured to decide installation positions of the power storage devices. The control device is configured to, when installing the power storage devices of a fewer count than an upper limit count of the installation positions, decide a position that satisfies a positional relation at which a center position of the vehicle is interposed between a position of a drive source of the vehicle and this position, as an installation position of the power storage devices of a fewer count than the upper limit count.

In this way, when power storage devices of a fewer count than an upper limit count are installed in the vehicle body, the storage devices are installed in a position that satisfies a positional relation at which the center position of the vehicle is interposed between the position of the drive source and this position, thereby suppressing the weight balance of the vehicle from being imbalanced toward the drive source side.

In one embodiment, the control device is configured to acquire information regarding the position of the drive source, and is configured to decide the installation position of the power storage devices of a fewer count than the upper limit count, using the information that is acquired.

In this way, the installation position of the power storage devices of a fewer count than the upper limit count is decided using information regarding the position of the drive source, and accordingly a suitable weight balance can be obtained.

In yet another embodiment, the control device is configured to acquire information about mounting positions set in advance in accordance with a count of the power storage devices that are installed, and is configured to decide the installation position of the power storage devices of a fewer count than the upper limit count, using the information that is acquired.

In this way, the installation position of the power storage devices of a fewer count than the upper limit count is decided using the installation positions corresponding to the count to be installed, and accordingly a suitable weight balance can be obtained.

In yet another embodiment, a replacement facility outside of the vehicle includes an attaching and detaching device that moves to each of the installation positions of the power storage devices, and detaches and attaches the power storage devices. The power storage devices installed in the vehicle body are replaced using the replacement facility.

In this way, power storage devices of a fewer count than the upper limit count can be installed at installation positions using the attaching and detaching device.

In yet another embodiment, the control device is configured to, when the vehicle is a two-wheel drive vehicle, decide a position that satisfies the positional relation, as the installation position of the power storage devices of a fewer count than the upper limit count.

In this way, since a two-wheel drive vehicle has a drive source installed either at a front side or a rear side thereof, a suitable weight balance can be obtained by deciding the installation position of the power storage devices of a fewer count than the upper limit count, as a position that satisfies a positional relation at which a center position of the vehicle is interposed between a position of the drive source and this position.

In yet another embodiment, the control device, when the vehicle is a four-wheel drive vehicle, decides a position close to the center position of the vehicle as the installation position of the power storage devices of a fewer count than the upper limit count.

In this way, since a four-wheel drive vehicle has drive sources installed at both the front side and the rear side, a suitable weight balance can be obtained by deciding a position close to the center position of the vehicle to be the installation position for the power storage devices of a fewer count than the upper limit count.

In a method according to a second aspect of this disclosure, the power storage devices installed in the vehicle body of the vehicle according to the first aspect are replaced using a replacement facility outside of the vehicle. The replacement facility is configured to identify the center position of the vehicle prior to replacement of the power storage devices, and transmits the center position that is identified to the control device. The control device is configured to decide a position that satisfies the positional relation using the center position received from the replacement facility, as the installation position of the power storage devices of a fewer count than the upper limit count.

In this way, by identifying the center position of the vehicle, the power storage devices of a fewer count than the upper limit count can be installed at suitable positions, and thereby a suitable weight balance can be obtained.

According to the present disclosure, a vehicle can be provided in which a suitable vehicle weight balance is obtained when batteries of a fewer count than the upper limit count are installed.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating an example of a configuration of a vehicle according to an embodiment;
FIG. 2 is a diagram illustrating an example of a configuration of a battery replacement system for replacing battery packs;
FIG. 3 is a flowchart showing an example of a replacement method for battery packs;
FIG. 4 is a flowchart showing an example of installation position setting processing in FIG. 3;
FIG. 5 is a diagram illustrating an example of installation positions for a battery pack in the vehicle according to the present embodiment;
FIG. 6 is a diagram illustrating an example of installation positions of a battery pack in the vehicle according to the present embodiment;
FIG. 7 is a diagram illustrating an example of display of energy flow during regenerative braking;
FIG. 8 is a diagram illustrating another example of display of energy flow during regenerative braking;
FIG. 9 is a diagram illustrating an example of an installation position of a battery pack in a modification;
FIG. 10 is a diagram illustrating an example of a configuration of a vehicle according to the modification; and
FIG. 11 is a diagram illustrating another example of a configuration of the vehicle according to the modification.

### DETAILED DESCRIPTION OF EMBODIMENTS

Embodiments of the present disclosure will be described in detail below with reference to the drawings. Note that the same or corresponding parts are denoted by the same signs throughout the drawings, and description thereof will not be repeated.

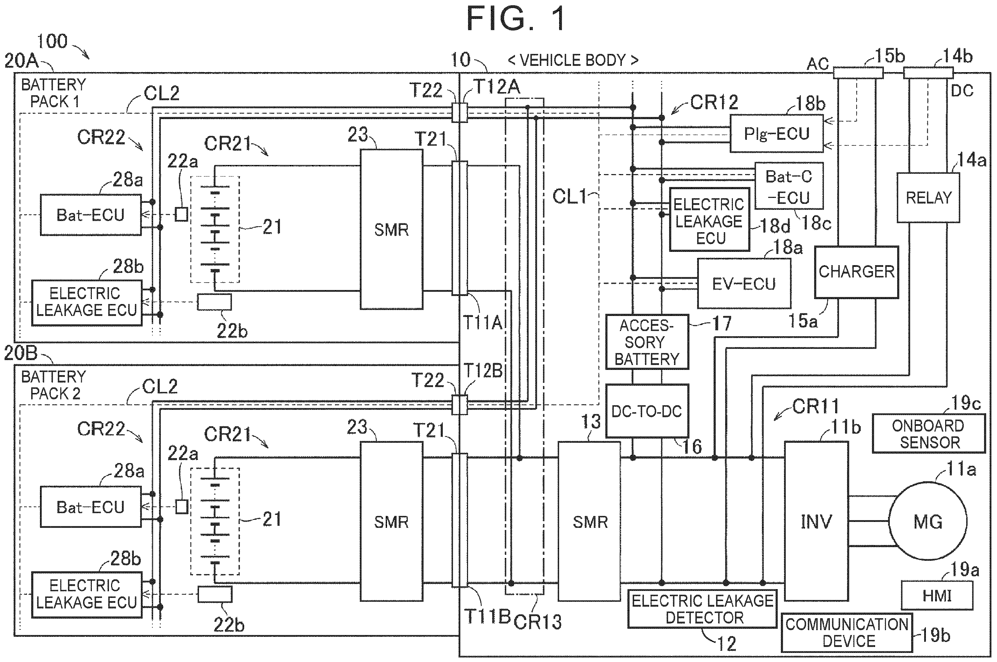

FIG. 1 is a diagram illustrating an example of a configuration of a vehicle according to an embodiment. With reference to FIG. 1, a vehicle 100 includes a vehicle body 10, a battery pack 20A (first power storage device), and a battery pack 20B (second power storage device). The vehicle body 10 is a portion of the vehicle 100 other than the battery packs 20A and 20B. The vehicle body 10 is equipped with a vehicle drive device that serves as a drive source. The vehicle drive device includes a motor generator (MG) 11a and an inverter 11b. The vehicle drive device is configured to cause the vehicle 100 to travel, using electric power output from each of the battery packs 20A and 20B. The battery packs 20A and 20B are configured to be connectable in parallel to the inverter 11b. The vehicle 100 is, for example, a battery electric vehicle that does not have an internal combustion engine. However, this is not restrictive, and the vehicle 100 may be a plug-in hybrid electric vehicle equipped with an internal combustion engine, or may be another type of electrified vehicle. In this embodiment, the battery packs 20A and 20B have the same configuration, and accordingly will be referred to as "battery pack 20" below when there is no need to distinguish therebetween.

The vehicle body 10 includes circuits CR11 and CR12. The battery pack 20 includes circuits CR21 and CR22. The circuit CR12 includes an accessory battery 17. The circuit CR21 includes a battery 21. The battery 21 is a secondary battery such as, for example, a lithium-ion battery, a nickel metal hydride battery, or a sodium-ion battery. The type of the secondary battery may be a liquid secondary battery or an all-solid-state secondary battery. A plurality of secondary batteries may make up an assembled battery. The accessory battery 17 corresponds to a low-voltage power supply that outputs electric power of which a voltage is lower than voltage of the battery 21. A direct current (DC)-to-DC converter 16 is provided between the circuits CR11 and CR12.

The circuit CR11 in the vehicle body 10 includes an MG 11a, an inverter 11b, a DC charging relay 14a, a DC inlet 14b, an alternating current (AC) charger 15a, and an AC inlet 15b. The circuit CR11 is also provided with an electric leakage detector 12. The circuit CR21 in the battery pack 20 is provided with a battery management system (BMS) 22a and an electric leakage detector 22b.

The vehicle body 10 further includes a terminal T11A to which the battery pack 20A is detachably attachable, a terminal T11B to which the battery pack 20B is detachably attachable, a parallel circuit CR13 that connects the terminal T11A and the terminal T11B in parallel, and an SMR 13 that is disposed between the parallel circuit CR13 and the vehicle drive device (inverter 11b). The circuit CR11 (high-voltage power supply line) is connected to each of the terminals T11A and T11B via the SMR 13 and the parallel circuit CR13. Each of the battery packs 20A and 20B includes a terminal T21 to which the vehicle body 10 is detachably attachable, and an SMR 23 disposed between the terminal T21 and the circuit CR21. The circuit CR21 (high-voltage power supply line) is connected to the terminal T21 via the SMR 23. The term "SMR" stands for "system main relay".

The terminal T21 of the battery pack 20A is connected to the terminal T11A (first terminal) of the vehicle body 10. The SMR 23 (first relay) of the battery pack 20A is disposed between the terminal T21 (third terminal) of the battery pack 20A and the battery 21 (first battery). The terminal T21 of the battery pack 20B is connected to the terminal T11B (second terminal) of the vehicle body 10. The SMR 23 (second relay) of the battery pack 20B is disposed between the terminal T21 (fourth terminal) of the battery pack 20B and the battery 21 (second battery). Each relay enables easily and suitably switching between connection/disconnection between the object device (inverter 11b) and each of the first battery and second battery.

The vehicle body 10 further includes a terminal T12A to which the battery pack 20A is detachably attachable, and a terminal T12B to which the battery pack 20B is detachably attachable. The circuit CR12 (low-voltage power supply line) within the vehicle body 10 is connected to each of the terminals T12A and T12B via the parallel circuit CR13. The parallel circuit CR13 connects the terminal T12A and the terminal T12B in parallel. A communication line CL1 (dashed line in FIG. 1) within the vehicle body 10 is also connected to each of the terminals T12A and T12B. Each of the battery packs 20A and 20B further includes a terminal T22. In each of the battery packs 20A and 20B, the circuit CR22 (low-voltage power supply line) and the communication line CL2 (dashed line in FIG. 1) are connected to the terminal T22.

The accessory battery 17 supplies electric power to drive accessories installed in the vehicle 100. The accessory battery 17 outputs direct current electric power to the circuit CR12 (low-voltage power supply line). In addition to the accessory battery 17, the circuit CR12 further includes ECUs 18a, 18b, 18c, and 18d. The circuit CR22 further includes ECUs 28a and 28b. The accessory battery 17 supplies electric power to, for example, each of the ECUs 18a to 18d, 28a, and 28b, that are connected to the low-voltage power supply line. The term "ECU" stands for "electronic control unit".

The ECU 18a corresponds to a control device (EV-ECU) that manages various types of control related to the vehicle 100. The ECU 18b corresponds to a control device (Plg-ECU) that detects the states of the DC inlet 14b and the AC inlet 15b. The ECU 18c corresponds to a control device (Bat-C-ECU) that controls the DC charging relay 14a and the AC charger 15a. The ECU 18d corresponds to a control device (first electric leakage ECU) that monitors an electric leakage state of the circuit CR11. The ECU 28a corresponds to a control device (Bat-ECU) that monitors a state of the battery 21 and controls the SMR 23. The ECU 28b corresponds to a control device (second electric leakage ECU) that monitors an electric leakage state of the circuit CR21.

Each ECU includes a processor and a storage device. The storage device is configured to be capable of saving stored information. The storage device stores, in addition to programs, various types of information to be used by the programs. In the present embodiment, various types of control are executed by the processor executing the programs stored in the storage device. Note however, that such processing may be executed by hardware (electronic circuits) alone, without using software.

In the vehicle 100, the ECUs are connected so as to be able to communicate with each other via an in-vehicle network (e.g., a Controller Area Network (CAN)). The ECU 18a acquires information from other ECUs, controls the inverter 11b, the DC-to-DC converter 16, and the SMRs 13 and 23, transmits control commands to the ECU 18c and the ECU 28a, and so forth.

The electric leakage detector 12 detects an electric leakage state (e.g., insulation resistance) of the circuit CR11, and outputs detection results thereof to the ECU 18d. The BMS 22a detects the state (current, voltage, temperature, etc.) of the battery 21, and outputs detection results thereof to the ECU 28a. The electric leakage detector 22b detects an electric leakage state of the circuit CR21, and outputs detection results thereof to the ECU 28b. The ECU 18a acquires information indicating the battery state and the electric leakage states from the ECUs 18d, 28a and 28b.

The DC-to-DC converter 16 transforms direct current electric power between the circuit CR11 and circuit CR12. Specifically, the DC-to-DC converter 16 steps down the direct current electric power from the battery 21 and performs output thereof to the accessory battery 17 and other accessories connected to the circuit CR12. The capacity of the battery 21 is greater than the capacity of the accessory battery 17.

The terminals T21 and T22 of the battery pack 20A are connected to the terminals T11A and T12A, or the terminals T21 and T22 of the battery pack 20B are connected to the terminals T11B and T12B, whereby the battery pack 20A and/or the battery pack 20B are installed to the vehicle body 10, thereby making up the vehicle 100. In the vehicle 100, the communication line CL1 of the vehicle body 10, the communication line CL2 of the battery pack 20A, and the communication line CL2 of the battery pack 20B are connected. These communication lines make up the in-vehicle network (e.g., the CAN) of the vehicle 100.

The MG 11a functions as a traction motor. The inverter 11b functions as a power control unit (PCU) for the MG 11a. The inverter 11b drives the MG 11a using electric power supplied from the batteries 21 of the battery packs. The MG 11a converts the electric power into torque to rotate drive wheels of the vehicle 100. The MG 11a also performs regenerative power generation, for example, when the vehicle 100 decelerates, and charges the battery 21.

Each of the DC inlet 14b and the AC inlet 15b includes a terminal that detects connection/disconnection of a charging cable (plug), and outputs, to the ECU 18b, a signal indicating whether the charging cable is connected. The ECU 18a acquires information indicating an inlet state from the ECU 18b, and transmits a control command to the ECU 18c. The AC charger 15a performs AC-to-DC conversion. The ECUs 18a to 18c cooperate to execute plug-in charging of the battery 21.

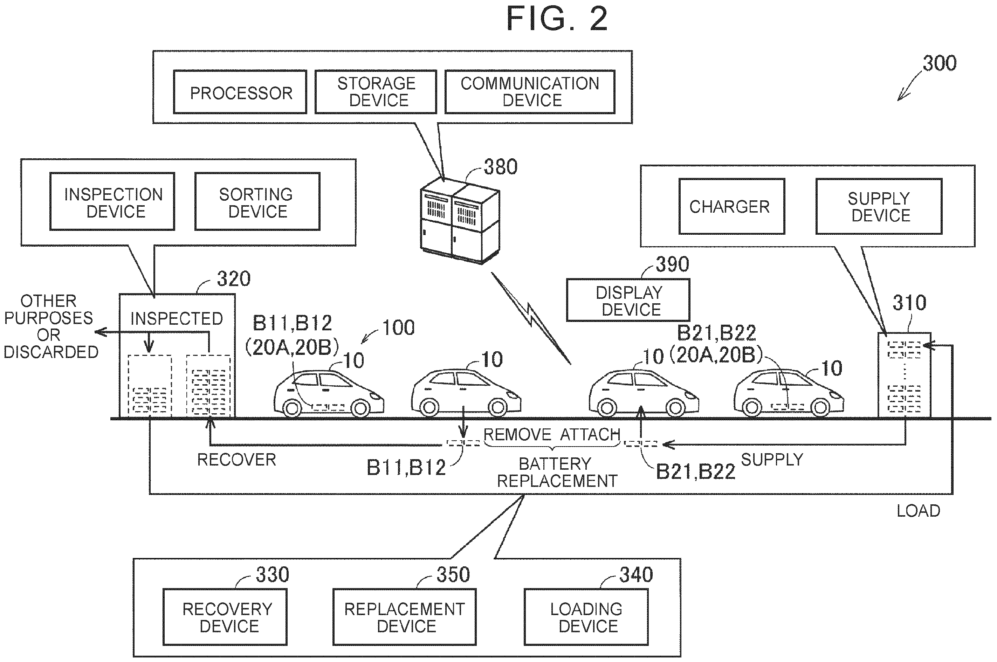

The vehicle body 10 further includes a human-machine interface (HMI) 19a and a communication device 19b. Note that the HMI 19a and the communication device 19b also receive supply of electric power from the accessory battery 17. The HMI 19a includes an input device and a display device provided in a vehicle cabin. The HMI 19a may include a touchscreen display. The input device outputs signals in accordance with input from a user to the ECU 18a. The communication device 19b is configured to be capable of wireless communication with a server 380 (FIG. 2), which will be described later. Various types of sensors that are omitted from illustration (representatively referred to as "onboard sensor 19c") are also installed in the vehicle body 10. The ECU 18a is configured to acquire detection results from these sensors, either directly or via other ECUs.

In the present embodiment, the HMI 19a includes a start switch. The start switch is commonly called a "power switch", an "ignition switch", or the like. The user of the vehicle 100 can operate the start switch to start or stop the control system of the vehicle 100 (including the ECUs), and to place the vehicle 100 in a Ready-ON state or a Ready-OFF state. The operations may be remote operations (e.g., request by wireless communication).

The Ready-ON state is a state in which the voltage of at least one battery 21 of the battery packs 20A and 20B connected to the vehicle body 10 is applied to the circuit CR11 of the vehicle body 10. In the Ready-ON state, the SMR 13 is in a closed state, the SMR 23 of at least one of the battery packs 20A and 20B is also in a closed state, and electric power is supplied to the vehicle drive device (MG 11a and inverter 11b) from the battery 21 corresponding to the SMR 23 that is in the closed state. The Ready-OFF state is a state in which the voltage of the battery 21 is not applied to the circuit CR11. In the Ready-OFF state, the SMR 13 is in an open state, and electric power is not supplied to the vehicle drive device from either battery 21 of the battery packs 20A and 20B.

The battery packs 20A and 20B installed in the vehicle 100 can be replaced with other battery packs. FIG. 2 is a diagram illustrating an example of a configuration of a battery replacement system for replacing battery packs. A battery replacement system 300 illustrated in FIG. 2 is implemented in a battery replacement station, for example.

With reference to FIG. 2, the battery replacement system 300 is configured such that a battery pack installed in the vehicle 100 is removed from the vehicle body 10, and another battery pack is attached to the vehicle body 10. In the following, an example will be described in which two battery packs (battery packs 20A and 20B) are simultaneously removed from the vehicle 100, and two replacement battery packs are simultaneously attached to the vehicle 100. However, this is not restrictive, and the battery packs 20A and 20B may be replaced one at a time in order. Also, battery pack replacement also includes a case in which, following removal of two battery packs, just one battery pack is installed to an installation position of either the battery pack 20A or the battery pack 20B.

Hereinafter, the two battery packs recovered from the vehicle 100 will be referred to as "battery packs B11 and B12". Moreover, the two battery packs to be attached to the vehicle 100 in place of the battery packs B11 and B12 will be referred to as "battery packs B21 and B22". Each of the battery packs B11, B12, B21, and B22 has the same configuration as the battery packs illustrated in FIG. 1. The battery packs B21 and B22 attached to the vehicle body 10 function as the battery packs 20A and 20B (FIG. 1) in the vehicle 100.

Specifically, the battery replacement system 300 includes a first stockpile device 310, a second stockpile device 320, a recovery device 330, a loading device 340, a replacement device 350, the server 380, and a display device 390. The first stockpile device 310 stockpiles a plurality of the battery packs to be supplied to vehicles. The first stockpile device 310 includes a pack accommodating unit (e.g., a storage shed), as well as a charger and a supply device. The second stockpile device 320 stockpiles battery packs recovered from a plurality of vehicles. The second stockpile device 320 includes a pack accommodating unit (e.g., a storage shed), as well as an inspection device and a sorting device. The server 380 includes a processor, a storage device, and a communication device, and functions as a control device. The storage device stores information (e.g., specification information) regarding each battery pack present in the battery replacement system 300, such that the information is distinguished by identification information of the battery pack (pack ID). The display device 390 displays information in accordance with instructions from the server 380.

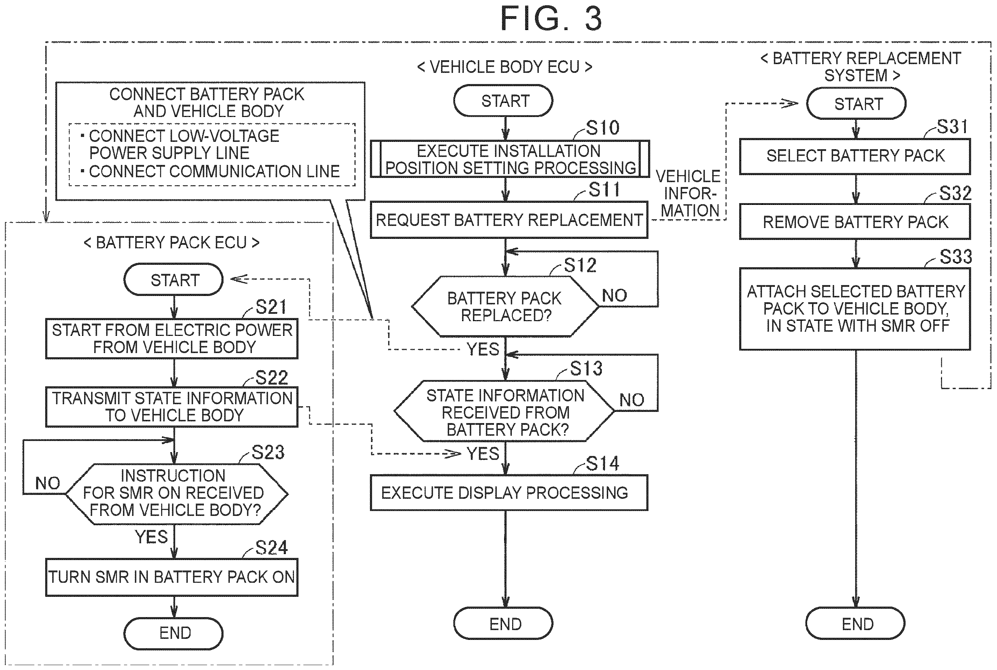

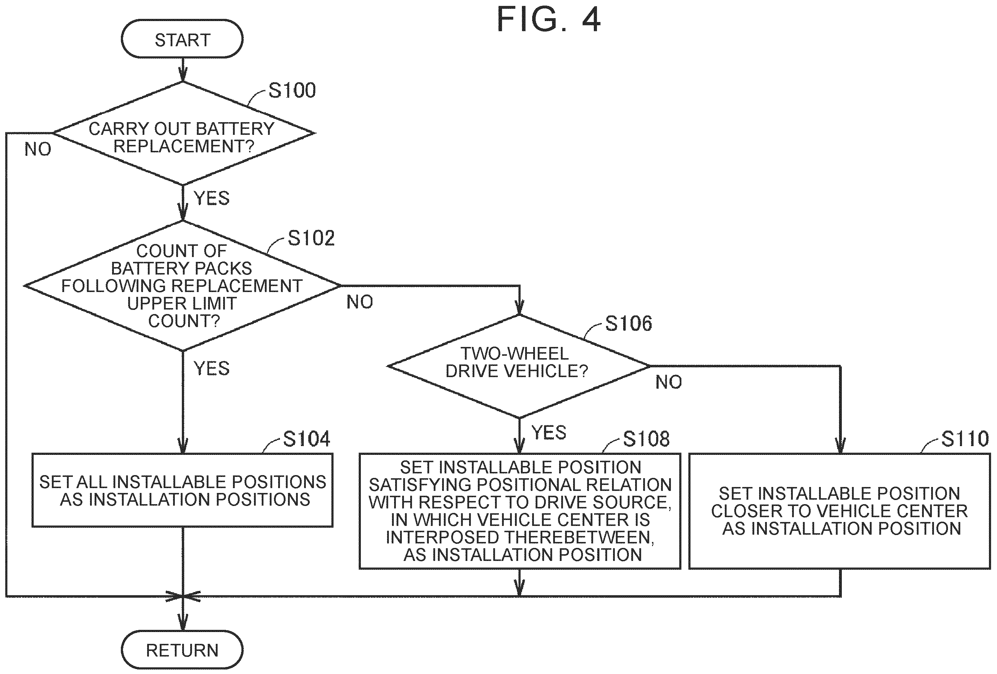

A battery replacement method will be described below with reference to FIGS. 1 to 4. FIG. 3 is a flowchart showing an example of a replacement method of battery packs. FIG. 4 is a flowchart showing an example of installation position setting processing in FIG. 3. For example, following the vehicle 100 being parked in a predetermined area in the battery replacement station, the ECU 18a starts a processing flow of S10 to S14 shown in FIG. 3. The ECU 18a may start the processing flow in response to a request from a terminal of a user of the vehicle 100 (user terminal) or a request from an input device in the vehicle 100. The ECU 18a and the server 380 are configured to be capable of wireless communication with each other.

In step (hereinafter, "step" will be abbreviated to "S") 10, the ECU 18a executes processing for setting installation positions of the battery packs following replacement thereof (hereinafter, referred to as "installation position setting processing").

In S100, the ECU 18a determines whether to carry out battery replacement. For example, the ECU 18a may determine that battery replacement will be carried out when acquiring position information and determining that the vehicle 100 is parked in a specified area within the battery replacement station, or may determine that battery replacement will be carried out when receiving a request for battery replacement from a user terminal following parking, or may determine that battery replacement will be carried out when receiving an operation from the user on the HMI 19a requesting battery replacement following parking. When determination is made that battery replacement is to be carried out (YES in S100), the processing transitions to S102.

In S102, the ECU 18a determines whether a count of battery packs set for replacement has reached an upper limit count. In the present embodiment, for example, the ECU 18a determines that the count of battery packs set for replacement is the upper limit when the count that is set is two, and determines that the count of battery packs set for replacement is not the upper limit when the count that is set is one. When determination is made that the count is the upper limit (YES in S102), the processing transitions to S104.

In S104, the ECU 18a sets all installable positions as installation positions. In this case, the ECU 18a sets, for example, positions A and B (described later) as the installation positions of the battery packs B21 and B22, respectively. Thereafter, the processing ends and transitions to S11. On the other hand, when determination is made that the count of battery packs set for replacement is not the upper limit count (NO in S 102), the processing transitions to S106.

In S106, the ECU 18a determines whether the vehicle 100 is a two-wheel drive vehicle. The ECU 18a acquires information regarding a drive system included in vehicle type information stored in memory or the like of the ECU 18a, for example, and determines whether the vehicle 100 is a two-wheel drive vehicle or a four-wheel drive vehicle. When determination is made that the vehicle is a two-wheel drive vehicle (YES in S106), the processing transitions to S108.

In S108, the ECU 18a decides a position that satisfies a positional relation in which a center position of the vehicle 100 is interposed between this position and the position of the drive source of the vehicle 100, as an installation position of the battery pack of which the count is fewer than the upper limit count. This is because when fewer battery packs than the upper limit count that can be installed are installed in vehicle 100, the weight balance of the vehicle may become imbalanced depending on the position at which the battery pack is installed, and suitable vehicle weight balance may not be obtained. The ECU 18a identifies an installable position for a battery pack that satisfies the above positional relation, based on the center position of the vehicle 100 and the position of the drive source, which are stored in memory or the like in advance, and decides the installable position that is identified to be the installation position for the battery pack that is fewer than the upper limit count. The center position of the vehicle 100 may be, for example, the center of gravity of the vehicle 100, the center of gravity in a front-rear direction of the vehicle, or the center of the wheelbase and also the center between treads. The processing then transitions to S11.

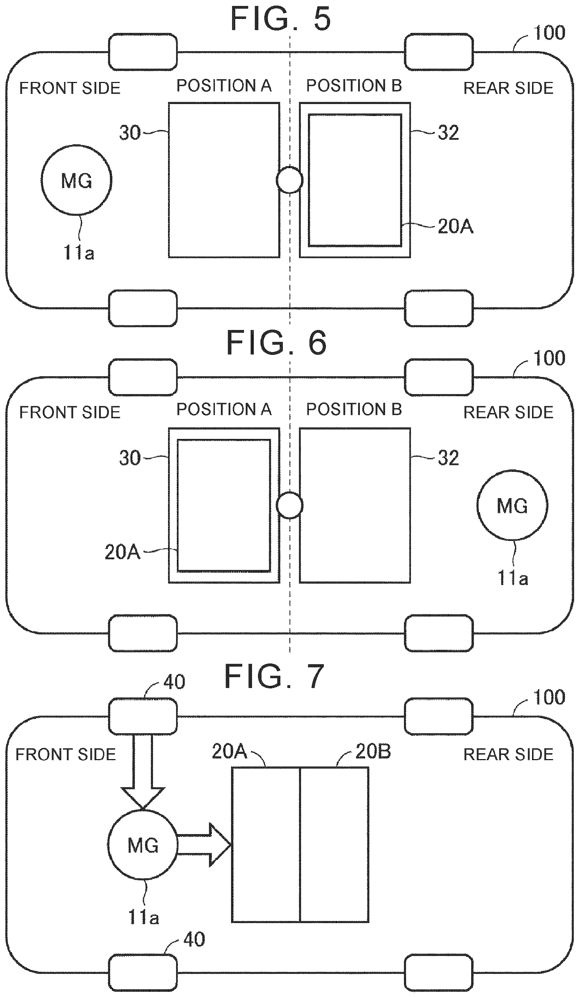

FIG. 5 is a diagram illustrating an example of installation positions of a battery pack in the vehicle 100 according to the present embodiment. FIG. 5 illustrates a configuration when the vehicle 100 is a two-wheel drive vehicle having the MG 11a installed on the front wheel side as a drive source. In FIG. 5, the center position of the vehicle 100 is located between an installable position 30 of the battery pack 20 (position A), and an installable position 32 thereof (position B). The battery packs B11 and B12 prior to replacement are respectively installed at position A and position B, which are set along a traveling direction of the vehicle 100. When the battery packs B11 and B12 are removed, the position A and the position B each become positions in which battery packs are installable.

In this case, the vehicle 100 is a two-wheel drive vehicle equipped with the MG 11a as a drive source on the front wheel side, and accordingly the ECU 18a decides the position B that satisfies the positional relation in which the center position of the vehicle 100 is interposed between this position and the position of the MG 11a, as the installation position for the battery pack that is replaced.

FIG. 6 is a diagram illustrating another example of installation positions of the battery pack in the vehicle 100 according to the present embodiment. FIG. 6 illustrates a configuration when the vehicle 100 is a two-wheel drive vehicle having the MG 11a installed on a rear wheel side as a drive source.

In this case, the vehicle 100 is a two-wheel drive vehicle equipped with the MG 11a as a drive source on the front wheel side, and accordingly the ECU 18a decides the position A that satisfies the positional relation in which the center position of the vehicle 100 is interposed between this position and the position of the MG 11a, to be the installation position for the battery pack that is replaced. Returning to FIG. 4, when determination is made that the vehicle 100 is not a two-wheel drive vehicle (i.e., a four-wheel drive vehicle) (NO in S106), the processing transitions to S110.

In S110, when there are multiple positions in the vehicle 100 where the battery pack is installable, the ECU 18a decides the position closest to the center position of the vehicle 100 to be the installation position. Note that in the present embodiment, both position A and position B are approximately the same distance from the center position, and accordingly the ECU 18a decides either position A or position B as being the installation position. For example, the ECU 18a may decide position B as being the installation position so as to minimize a difference between an axle load of the front axle and an axle load of the rear axle, or may set, in advance, an installation position with higher priority, based on a range of drive distribution, or the like. The processing then transitions to S11.

In S11, the ECU 18a transmits to the server 380 a signal requesting replacement of the battery pack (hereinafter referred to as "replacement request signal"). The replacement request signal includes identification information (vehicle ID) of the vehicle 100, specification information of each battery pack (battery packs B11 and B12) installed in the vehicle 100, and information regarding the installation positions of the battery packs. The replacement request signal may include specification information of the vehicle body 10, instead of or in addition to the specification information of the battery packs B11 and B12.

In S12, the ECU 18a determines whether the battery pack has been replaced. While replacement of the battery pack has not ended (NO in S12), the determination in S12 is repeatedly executed.

Upon receiving the replacement request signal, the server 380 starts the processing flow of S31 to S33 in FIG. 3.

In S31, the server 380 selects a battery pack that meets the specifications of the vehicle 100 (the specifications of the battery packs B11 and B12 or the vehicle body 10) indicated by the replacement request signal, from among the battery packs (inventory) held in the first stockpile device 310. When judgement is made that the no battery pack that meets the specifications of the vehicle 100 is present in the inventory, the server 380 may cause the display device 390 to display a message explaining the situation, and terminate the battery replacement processing. When a battery pack is selected in S31, the processing transitions to S32.

In S32, the server 380 controls the replacement device 350 such that the battery packs B11 and B12 are removed from vehicle body 10. Thus, the vehicle body 10 and the battery packs B11 and B12 are separated. The processing then transitions to S33.

Although not shown in the flowchart, reuse processing is executed with respect to the battery packs B11 and B12 that are removed. Specifically, the recovery device 330 transports (recovers) the battery packs B11 and B12 from the replacement device 350 to the second stockpile device 320. The battery packs stockpiled in the second stockpile device 320 are then sequentially inspected by the inspection device, and the sorting device sorts the battery packs by purpose, based on the inspection results. Each battery pack is reused for a corresponding purpose (for vehicle use, stationary use, etc.). Battery packs that cannot be reused are discarded. The battery packs (for vehicle use) to be reused in the battery replacement system 300 are transported to the first stockpile device 310 by the loading device 340. The battery packs that are transported are loaded into the first stockpile device 310.

In S33, the server 380 controls the charger of first stockpile device 310 such that the battery pack B21 or B22 selected in S31 is charged. Note however, that the charging timing can be changed as appropriate. A battery pack that is charged may be loaded into the first stockpile device 310. When charging is completed, the server 380 controls the supply device of the first stockpile device 310 to transport (supply) the battery pack B21 or B22 from the first stockpile device 310 to the replacement device 350. Next, the server 380 controls the replacement device 350 to attach the battery pack B21 or B22 to the vehicle body 10. At this time, the SMR 23 of the battery pack B21 or B22 that is attached is in the open state. Thereafter, the server 380 transmits a signal notifying completion of attaching the battery pack (hereinafter referred to as "replacement-completed signal") to the ECU 18a.

FIG. 2 illustrates an example in which removal of the battery packs and attachment of the battery packs are performed at different positions. The vehicle position may be adjusted before removing the battery pack, before attaching the battery pack, or both. A transport device (e.g., a conveyor-type transport device), or a transport robot, which are omitted from illustration, may move the vehicle. However, removal of the battery packs and attachment of the battery packs may be performed at the same position. The replacement of the battery packs (removal and attachment) may be performed with the vehicle in a stationary state. Any transport method may be used as a transport method in each of the recovery device 330, the supply device, and the loading device 340, as well. These transport methods may be a conveyor method or a method using a transport robot. Note that the user may manually replace the battery packs (power storage devices) without communication between the battery replacement system (station) and the vehicle.

For example, when battery packs B21 and B22 are attached to vehicle body 10, the terminals T21 and T22 of the battery pack B21 are connected to the terminals T11A and T12A of vehicle body 10, respectively, and the terminals T21 and T22 of battery pack B22 are connected to terminals T11B and T12B of vehicle body 10, respectively. Thus, the vehicle body 10 and the battery packs B21 and B22 are in the connected state illustrated in FIG. 1. By attaching the battery packs B21 and B22 to the vehicle body 10, the low-voltage power supply lines (circuits CR12, CR22) and the communication lines (communication lines CL1, CL2) are connected between the vehicle body 10 and each of the battery packs B21 and B22. At each of the battery packs B21 and B22, the processing flow of S21 to S24 shown in FIG. 3 is then started.

In S21, the ECU 28a is started by electric power supplied from the power supply (accessory battery 17) within the vehicle body 10. The processing then transitions to S22.

In S22, the ECU 28a transmits information indicating the state of the battery pack (hereinafter referred to as "state information") to the ECU 18a. The state information includes, for example, information regarding voltage of the battery 21 at the current time, detected by the BMS 22a. The voltage of the battery 21 can vary depending on state of charge (SOC) of the battery 21. The SOC is, for example, a proportion of the current charge amount as to the charge amount in a fully charged state, expressed as a percentage ranging from 0 to 100%. The processing then transitions to S23.

In S23, the ECU 28a determines whether an SMR on command has been received from the vehicle body 10. The ECU 28a waits for the SMR on command from the vehicle body 10 in S23 with the SMR 23 maintained in an open state. When the ECU 28a receives the SMR on command (YES in S23), the processing then transitions to S24.

In S24, the ECU 28a switches the SMR 23 from the open state (disconnected state) to the closed state (connected state).

On the other hand, when the battery packs B21 and B22 are attached to the vehicle body 10, the ECU 18a receives the replacement-completed signal from the server 380 (S33). Thus, judgment of YES is made in S12, and the processing advances to S13.

In S13, the ECU 18a determines whether the above state information has been received from the ECU 28a of the battery pack B21 or B22. Upon the ECU 18a receiving the above state information from the battery pack (YES in S13), the processing transitions to S14.

In S14, the ECU 18a executes display processing. The ECU 18a executes processing to display, on the display device of the HMI 19a, an image relating to energy flow corresponding to the count of battery packs installed, as display processing.

FIG. 7 is a diagram illustrating an example of a display of energy flow during regenerative braking. As illustrated in FIG. 7, for example, when two battery packs, namely battery packs B21 and B22, are installed in the vehicle body 10, an image of the vehicle 100 including wheels 40, the MG 11a, and the battery packs 20A and 20B, is displayed on the display device of the HMI 19a. The display of these is also displayed while the vehicle 100 is being driven, for example. For example, when regenerative braking is performed in the vehicle 100, an arrow from a wheel 40 serving as a drive wheel to the MG 11a, and an arrow from the MG 11a to the battery packs 20A and 20B, are displayed, thereby visually presenting the flow of regenerative electric power (energy flow) to the user.

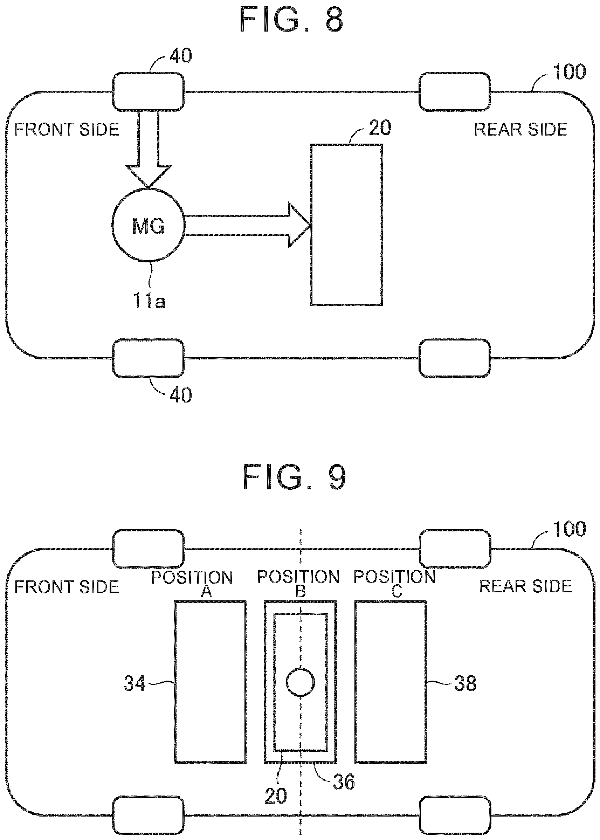

FIG. 8 is a diagram illustrating another example of a display of energy flow during regenerative braking. As illustrated in FIG. 8, for example, when only one battery pack B22 is installed in the vehicle body 10, an image of the vehicle 100 including the wheels 40, the MG 11a, and the battery pack 20B is displayed on the display device of the HMI 19a. For example, when regenerative braking is performed in the vehicle 100, the arrow from the wheel 40 to the MG 11a, and the arrow from the MG 11a to the battery pack 20B, are displayed in the same way as in FIG. 7, thereby visually presenting the energy flow. At this time, only the battery pack 20B is displayed on the display device of the HMI 19a, and accordingly the user can recognize that only the battery pack 20B is installed in the vehicle body 10, i.e., that there is room to install another battery pack.

Note that after the battery pack B21 or B22 is attached to the vehicle body 10, whether there is an abnormality in the battery pack that is replaced may be determined by detecting various states, such as the voltage and so forth of the battery pack B21 or B22 that is attached.

As described above, in the vehicle according to the present embodiment, when the count of battery packs installed in the vehicle body 10 is fewer than the upper limit count (e.g., one), the weight balance of the vehicle 100 can be suppressed from being imbalanced toward the drive source side, by installing the battery pack at position B that the positional relation in which the center position of the vehicle 100 is interposed between this position and the position of the MG 11a, where the drive source is installed on the front wheel side. Accordingly, a vehicle can be provided in which suitable vehicle weight balance is obtained when fewer batteries than the upper limit count are installed.

Further, the ECU 18a acquires information relating to the position of the drive source from the memory, and uses the acquired information to decide the installation positions of battery packs that are fewer than the upper limit count, such that suitable weight balance can be obtained.

Further, a replacement facility (replacement device 350) that functions as an attaching and detaching device can move to each of the multiple battery packs installed in the vehicle body 10, and perform attaching and detaching of the battery packs, thereby allowing the battery packs to be installed at predetermined installation positions.

Further, when the vehicle 100 is a two-wheel drive vehicle, suitable weight balance can be obtained by deciding the installation position to be a position such that the center position of the vehicle 100 is interposed between the drive source and the installation position.

Further, when the vehicle 100 is a four-wheel drive vehicle, suitable weight balance can be obtained by deciding an installable position for the battery pack that is close to the center position of the vehicle 100 to be the installation position.

Hereinafter, a modification will be described. In the above-described embodiment, determination is made regarding whether the vehicle 100 is a two-wheel drive vehicle, but for example, when the vehicle 100 is a two-wheel drive vehicle, memory of the ECU 18a may store a flowchart in which the processing of S106 and the processing of S110 in the flowchart in FIG. 4 are omitted, and when the vehicle 100 is a four-wheel drive vehicle, memory of the ECU 18a may store a flowchart in which the processing of S106 and the processing of S108 in the flowchart in FIG. 4 are omitted. Thus, two different flowcharts that differ depending on the drive system may be stored in the memory of the ECU 18a.

Further, in the above embodiment, a case is exemplified in which the upper limit count of battery packs installed in the vehicle 100 is two, but the upper limit of the count of battery packs may be three or more.

FIG. 9 is a diagram illustrating an example of an installation position of a battery pack in the modification. As illustrated in FIG. 9, the vehicle body 10 in this modification has three installation positions 34, 36, 38 (hereinafter referred to as position A, position B and position C), for battery packs, set laid out along the traveling direction of the vehicle 100. The installation position 36 illustrated at position B includes the center position of the vehicle 100.

Thus, when one battery pack is installed in the vehicle body 10, the battery pack is installed at position C when the vehicle is a two-wheel drive vehicle with the drive source installed on the front wheel side, the battery pack is installed at position A when the vehicle is a two-wheel drive vehicle with the drive source installed on the rear wheel side, and the battery pack is installed at position B, close to the center position of the vehicle 100, when the vehicle is a four-wheel drive vehicle.

Furthermore, in the above-described embodiment, description has been made that information regarding the installation position of the drive source is stored in memory of the ECU 18a, and the installation position of the battery pack following replacement is decided from the installation position of the driving source and the center position of vehicle 100 that are acquired. However, for example, information regarding the position that is in a positional relation with respect to the installation position of the drive source, such that the center position of the vehicle 100 is interposed therebetween, depending on the number of battery packs installed, may be stored in the memory of the ECU 18a, and the installation position may be decided based on the number of battery packs installed. Thus, the battery pack following replacement can be installed in a position that allows suitable weight balance to be obtained.

Furthermore, in the above-described embodiment, description has been made that information regarding the center position of the vehicle 100 is stored in memory of the ECU 18a, and the installation position of the battery pack following replacement is decided from the installation position of the drive source and the center position of the vehicle 100. However, for example, the ECU 18a may obtain information about the center position of the vehicle 100 from the server 380. The server 380 may identify the center position of the vehicle 100 using a camera, a weight measuring device, or the like, when the vehicle 100 is parked in a predetermined area within the battery replacement station, and transmit information regarding the center position of the vehicle 100 that is identified, to the vehicle 100. The server 380 may identify the center of gravity in the direction of travel of the vehicle 100 as the center position of the vehicle 100 based on the ratio of the axle load of the front wheels to the axle load of the rear wheels, or may identify a position half the total length from the front or rear of the vehicle 100 as the center position of the vehicle 100. Thus, fewer battery packs than the upper limit count can be installed at suitable positions, and thereby suitable weight balance can be obtained.

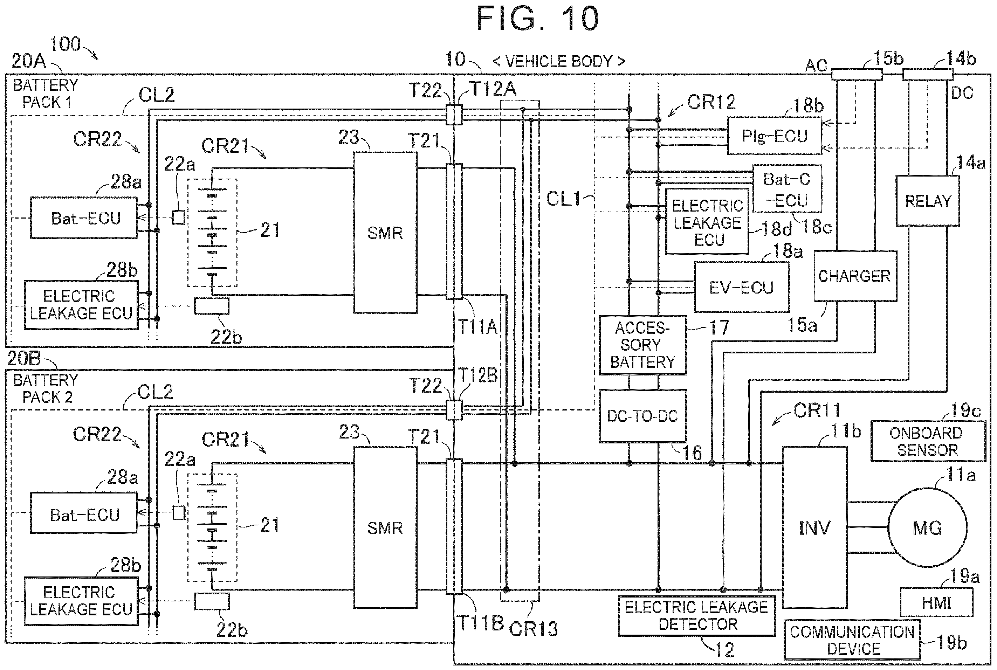

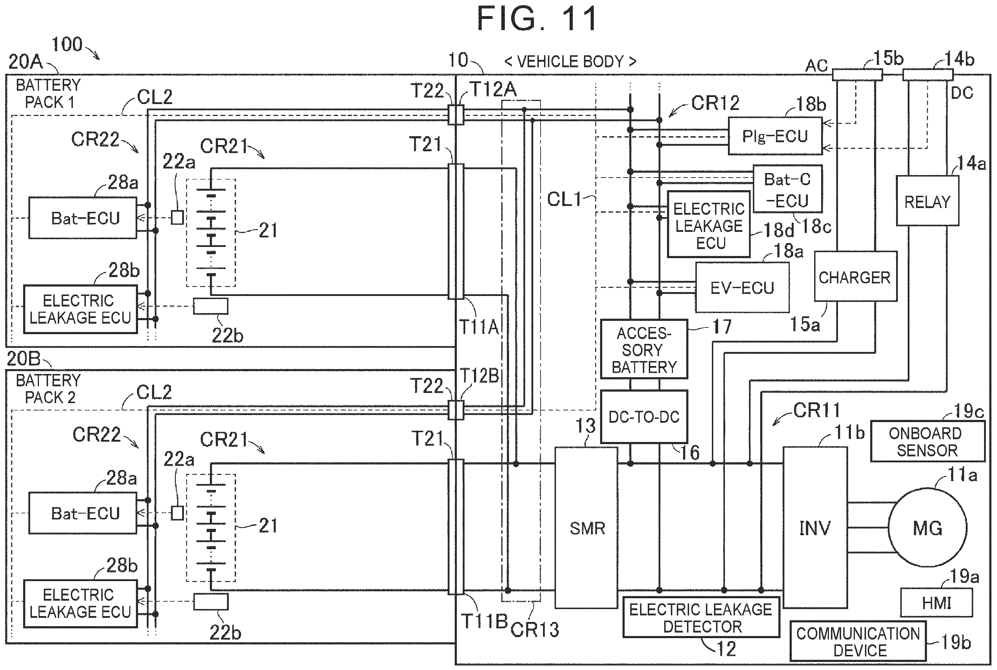

The configuration of the vehicle body illustrated in FIG. 1 can be further changed as appropriate. For example, the SMR 13 of the vehicle body 10 may be omitted as illustrated in FIG. 10, or the SMR 23 of the battery pack 20 may be omitted as illustrated in FIG. 11. Also, at least one of the DC inlet 14b and the AC inlet 15b may be omitted, or may be changed to one inlet common to AC and DC. These inlets may be configured to allow bidirectional electric power transfer. The vehicle body may execute external power feed (Vehicle to Everything (V2X)) using electric power output from a battery pack that is attached.

Further, the user terminal may be a mobile terminal carried by the vehicle user. Examples of mobile terminals include smartphones, laptops, handheld game consoles, wearable devices, and electronic keys. The vehicle is not limited to a passenger car, and may be a bus, a truck, or a work vehicle (e.g., a tractor, a combine harvester, or a forklift truck). The vehicle may be configured to be capable of travelling unmanned by automated driving or remote driving.

Note that all or part of the above modifications may be carried out combined as appropriate. The embodiment disclosed herein should be construed as exemplary in all respects and not restrictive. The scope of the invention is set forth in the claims rather than in the above description, and is intended to include all modifications within the meaning and scope equivalent to those of the claims.

## Claims

1. A vehicle (100) comprising:
a vehicle body (10) configured such that a plurality of power storage devices is detachably attachable; and
a control device (18a) configured to decide installation positions of the power storage devices, wherein
the control device (18a) is configured to, when installing the power storage devices of a fewer count than an upper limit count of the installation positions, decide a position that satisfies a positional relation at which a center position of the vehicle (100) is interposed between a position of a drive source of the vehicle (100) and this position, as an installation position of the power storage devices of a fewer count than the upper limit count.

2. The vehicle (100) according to claim 1, wherein the control device (18a) is configured to acquire information regarding the position of the drive source, and is configured to decide the installation position of the power storage devices of a fewer count than the upper limit count, using the information that is acquired.

3. The vehicle (100) according to claim 2, wherein the control device (18a) is configured to, when the vehicle (100) is a two-wheel drive vehicle, decide a position that satisfies the positional relation, as the installation position of the power storage devices of a fewer count than the upper limit count.

4. The vehicle (100) according to claim 3, wherein the control device (18a) is configured to, when the vehicle (100) is a four-wheel drive vehicle, decide a position close to the center position of the vehicle (100) as the installation position of the power storage devices of a fewer count than the upper limit count.

5. The vehicle (100) according to any one of claims 1 to 4, wherein the control device (18a) is configured to acquire information about mounting positions set in advance in accordance with a count of the power storage devices that are installed, and is configured to decide the installation position of the power storage devices of a fewer count than the upper limit count, using the information that is acquired.

6. A method for replacing power storage devices installed in the vehicle body (10) of the vehicle (100) according to any one of claims 1 to 5, wherein:
a replacement facility (350) outside of the vehicle includes an attaching and detaching device that moves to each of the installation positions of the power storage devices, and detaches and attaches the power storage devices; and
the power storage devices installed in the vehicle body (10) are replaced using the replacement facility (350).

7. A method for replacing power storage devices installed in the vehicle body (10) of the vehicle (100) according to any one of claims 1 to 5, wherein:
the power storage devices installed in the vehicle body (10) are replaced using a replacement facility (350) outside of the vehicle;
the replacement facility (350) identifies the center position of the vehicle (100) prior to replacement of the power storage devices, and transmits the center position that is identified to the control device (18a); and
the control device (18a) decides a position that satisfies the positional relation using the center position received from the replacement facility (350), as the installation position of the power storage devices of a fewer count than the upper limit count.
